# FASCICULE DE BREVET EUROPEEN

(11) **EP 1 150 409 B1**
(45) Date de publication et mention de la délivrance du brevet: **24.07.2002**
(21) Numéro de dépôt: 01490014.6
(22) Date de dépôt: 25.04.2001
(51) Int. Cl.: H02G 3/30

(54) **Tronçons de chemin à câbles en forme de goulotte, chemin à câble formé par assemblage d'au moins deux des dits tronçons assemblés et procédé de montage d'un tel chemin à câbles**
Kabelrinnenabschnitte und daraus hergestellte Kabelrinne durch Verbinbung von mindestens zwei Abschnitten und deren Herstellungsverfahren
Cable duct sections, cable duct obtained by asembling at least 2 two sections and mounting process

(30) Priorité: 28.04.2000 FR 0005450
(43) Date de publication de la demande: 31.10.2001
(73) Titulaire: Tolmega, S.A., 62400 Bethune (FR)
(72) Inventeur: de L'Hamaide, Nicolas, 62400 Bethune (FR)
(74) Mandataire: Hennion, Jean-Claude

(56) Documents cités:
- DE-U- 1 903 574
- DE-U- 7 430 346
- DE-U- 29 615 854
- US-A- 4 888 452

## Description

L'invention se rapporte au domaine technique des systèmes de supports de câbles, notamment de câbles électriques et/ou de câbles de télécommunications ou équivalents.

On connaît dans l'art antérieur trois grands types de supports de câbles : les échelles à câbles, les chemins à câbles en treillis de fils, et les goulottes.

L'invention concerne plus particulièrement les goulottes ou gaines techniques formant chemins à câbles.

Par « goulotte », on désigne ici les chemins à câbles formés par l'assemblage de profilés comprenant au moins une paroi formant fond et deux ailes, ces profilés présentant notamment des sections transversales en U ou en C.

L'invention concerne notamment des goulottes du type ci dessus dont les parois, pleines ou perforées, sont configurées sur leur bord libre pour recevoir un couvercle, par exemple par encliquetage.

Les profilés des goulottes sont classiquement élaborés en matériau polymère, notamment extrudé, ou en alliage métallique.

Pour des exemples de telles goulottes, on peut se référer, par exemple, aux documents suivants :
- demandes de brevet en France publiées sous les numéros 1 471 497, 2 290 063, 2 306 552, 2 313 786, 2 365 902, 2 383 539, 2 395 449, 2 406 327, 2 435 844, 2 478 389, 2 481 015, 2 536 219, 2 610 145, 2 610 769, 2 615 587, 2 683 403, 2 686 142, 2 689 605, 2 691 227, 2 691 228, 2 712 831, 2 734 956, 2 749 912, 2 749 913, 2 749 914, 2 769 761, 2 481 015 ;
- demandes de brevet européen publiées sous les numéros 054 456, 083 089, 113 981, 208 924, 278 923, 292 389, 315 531, 348 285, 403 440, 518 404, 570 272, 657 672, 695 009, 813 012, 933 850 ;
- demande internationale de brevet publiée sous le numéro 93/23694.

L'assemblage des profilés formant tronçons de goulottes est usuellement obtenu par des éclisses ou plaquettes plates, éventuellement articulées, ou par des cornières.

On distingue trois grands types de mise en place et fixation de ces éclisses :
- le boulonnage ;
- le rabattement de pattes préalablement introduites dans des perforations des tronçons de goulotte ;
- l'encliquetage.

Ainsi, par exemple :
- le document FR-A-1 584 328 décrit des éclisses réalisées sous forme de plaquettes pourvues de saillies qui s'engagent dans les perforations des tronçons de goulotte, les saillies étant creuses de sorte à pourvoir recevoir des broches agissant comme des coins ;
- le document EP-A-0 461 974 décrit un autre mode de fixation d'éclisses dans les perforations des ailes des goulottes, chaque patte de verrouillage de ces éclisses étant pliée transversalement après traversée d'une perforation d'une aile de la goulotte ;
- le document FR-A-2 686 141 décrit des éclisses en forme de cornières rapportées par encliquetage en regard de la face interne des ailes de goulotte ;
- le document FR-A-2 606 843 décrit des éclisses en forme de cornière dont une aile est agencée de façon à être appliquée par encliquetage sur toute la hauteur de la face externe d'une aile latérale de chacun des deux profilés à réunir.

D'autres exemples d'assemblage des éléments de goulottes peuvent être trouvés, par exemple, dans les documents suivants : EP-A-0 520 583, EP-A-0 552 117, EP-A-0 721 243, FR-A-2 633 031, FR-A-2 408 748, FR-A-2 653 608, FR-A-2 686 141, FR-A-2 713 737, FR-A-2 723 167, FR-A-2 735 557, WO-A-92/04755, WO-A-91/03090.

Les goulottes connues de l'art antérieur présentent chacune des inconvénients, aucune des solutions proposées ne répondant de manière optimum aux souhaits des monteurs et utilisateurs, à savoir notamment :
- facilité d'assemblage et désassemblage mutuel des tronçons de goulotte ;
- facilité de montage et démontage des goulottes sur des supports tels que consoles ;
- facilité de mise en place et enlèvement d'accessoires sur les goulottes ;
- résistance élevée au déversement. Par « déversement », on désigne ici le flambage des ailes du profilé sous l'effet d'une charge trop importante, ce flambage conduisant à une flexion de la paroi de fond.

L'invention vise à proposer une nouvelle conception de goulotte satisfaisant aux souhaits mentionnés ci-dessus et ne présentant les inconvénients des goulottes connues dans l'art antérieur.

A cette fin, l'invention se rapporte, selon un premier aspect, à un tronçon de chemin à câbles en forme de goulotte, de section transversale en forme générale de U ou de C, au moins une des parois de pourtour de ce tronçon de chemin à câbles étant pourvue d'au moins un évidement externe formant mortaise d'assemblage à queue d'aronde destiné à loger une éclisse d'assemblage de tronçons de goulottes disposés aboutés, les évidements longitudinaux des tronçons étant sensiblement placés en alignement et continuité, l'ouverture de la mortaise étant tournée vers l'extérieur du tronçon de chemin à câble.

Ce tronçon de chemin à câble en forme de goulotte sera par la suite simplement dénommé tronçon de goulotte.

Selon diverses réalisations, ce tronçon de goulotte présente les caractères suivants, éventuellement combinés :
- il comprend une paroi de fond et deux ailes latérales disposées en regard, au moins une des deux ailes étant pourvue d'au moins un desdits évidements externes formant mortaise d'assemblage à queue d'aronde ;
- la paroi de fond est pourvue d'au moins un desdits évidements externes formant mortaise d'assemblage à queue d'aronde ;
- les deux ailes sont sensiblement symétriques par rapport à un plan perpendiculaire à la paroi de fond ;
- au moins une de ses parois de pourtour est pourvue d'au moins un évidement interne formant mortaise d'assemblage, ledit évidemment interne formant le cas échéant mortaise d'assemblage à queue d'aronde ;
- sa paroi de fond est pourvue d'ondulations transversales formant raidisseurs et aptes à supporter des moyens de maintien des câbles en position dans le tronçon de goulotte ;
- il est élaboré en un matériau choisi parmi le groupe comprenant les alliages métalliques, les matériaux polymères, les matériaux composites ;
- dans un premier type de réalisation, il est en forme générale de profilé élancé rectiligne, ce profilé étant obtenu par extrusion, co-extrusion, pultrusion ou tout autre procédé équivalent ;
- dans un second type de réalisation, il est en forme générale de profilé courbe, ce profilé étant obtenu par moulage, injection, ou tout autre procédé équivalent ;
- dans un type de réalisation particulier, il est élaboré en matériau composite pultrudé.

L'invention se rapporte, selon un deuxième aspect, à une goulotte formée par l'assemblage de tronçons de goulottes tels que présentés ci-dessus, cet assemblage est obtenu notamment par des éclisses logées dans au moins un desdits évidements externes formant mortaise d'assemblage à queue d'aronde.

Dans une réalisation, la goulotte comprend des raidisseurs rapportés sur la paroi de fond d'au moins un tronçon de goulotte.

L'invention se rapporte, selon un troisième aspect, à un procédé de montage d'une goulotte telle que présentée ci dessus, ce procédé comprenant une étape de pré-montage d'au moins une éclisse, sur un tronçon de goulotte, cette éclisse étant disposée en position rentrée dans un évidement externe formant mortaise d'assemblage à queue d'aronde, cet évidement débouchant sur un bord d'extrémité dudit tronçon de goulotte.

Dans une réalisation particulière, le procédé de montage comprend une étape de fixation d'au moins un tronçon de goulotte sur un support tel qu'une console, au moyen de clames venant en appui sur un bord d'un évidement externe.

D'autres objets et avantages de l'invention apparaîtront au cours de la description suivante de modes de réalisation, description qui va être effectuée en se référant aux dessins annexés, dans lesquels :
- la figure 1 est une vue en perspective d'un tronçon de goulotte, selon un mode de réalisation de l'invention ;
- la figure 2 est une vue de détail en coupe transversale d'une partie extrême supérieure du tronçon de goulotte représenté en figure 1, sur laquelle est monté un couvercle d'obturation ;
- la figure 3 est une vue de détail en coupe transversale d'un mode de fixation sur un cadre du tronçon de goulotte représenté en figure 1 ;
- la figure 4 est une vue schématique de détail, en coupe transversale, du principe de fixation d'un accessoire ou d'une éclisse sur une goulotte selon l'invention ;
- les figures 5 à 9 sont des vues en coupe transversale schématiques partielles de variantes de réalisation de tronçons de goulotte selon l'invention ;
- la figure 10 est une vue en coupe transversale schématique partielle d'un mode de réalisation de couvercle de goulotte selon l'invention.

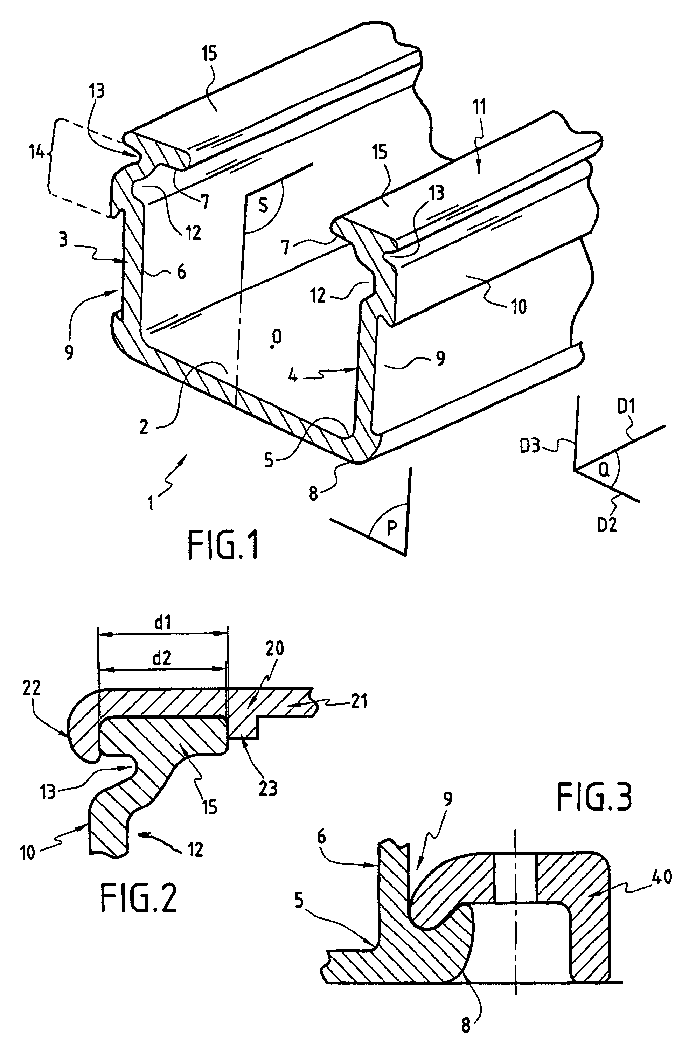

On se rapporte tout d'abord à la figure 1.

Sur cette figure, un tronçon de goulotte selon l'invention est représenté en perspective.

Afin de simplification, la description va être effectuée pour un tronçon de goulotte sensiblement rectiligne et s'étendant suivant une direction D1 dite longitudinale.

Le tronçon de goulotte sera décrit, en référence à la figure 1, en considérant que cette direction D1 est à l'horizontale.

Il est entendu toutefois que cette direction D1 peut ne pas être horizontale lorsque le tronçon de goulotte est en situation d'utilisation.

Il est entendu également que ce tronçon de goulotte peut être courbe.

Cette courbure peut être «dans le plan », le tronçon de goulotte comprenant par exemple :
- une paroi de fond du restant sensiblement suivant un même plan moyen ;
- deux ailes latérales courbées, le rayon de courbure des ailes étant constant ou non, le tronçon de profilé comprenant une seule courbure ou plusieurs courbures successives.

Cette courbure du tronçon de chemin à câbles peut être « hors plan », le tronçon de goulotte comprenant par exemple:
- une paroi de fond concave ou convexe, à rayon de courbure constant ou non, à une seule courbure ou plusieurs courbures successives ;
- deux ailes latérales, disposées en regard l'une de l'autre, en saillie de la paroi de fond.

L'expression « tronçon de goulotte » employée dans cette description désigne tout autant des tronçons de profilés rectilignes (tels que représentés en figure 1), que des tronçons de profilés courbes, tels que définis ci dessus.

L'expression « tronçon de goulotte » employée dans cette description concerne également les pièces formant intersections ou aiguillages dans les goulottes ou gaines techniques formant chemins à câbles, dès lors que ces pièces présentent des segments, notamment des segments d'extrémité d'assemblage, de formes identiques ou équivalentes à celles décrites et revendiquées.

Ces pièces d'intersections ou d'aiguillages des chemins à câbles sont par exemple en forme de T, de X ou de Y.

Le tronçon de goulotte vu en figure 1 présente une extrémité libre s'étendant dans un plan P transversal, sensiblement perpendiculaire à la direction D1.

Ce tronçon de goulotte, lorsque vu dans un plan transversal tel que le plan P, a une section en forme générale de U ou de C.

Ce tronçon de goulotte 1 comprend une paroi de fond 2 et deux ailes latérales 3,4 placées en regard l'une de l'autre.

Dans le mode de réalisation représenté en figure 1, cette paroi de fond 2 est sensiblement plane et s'étend parallèlement à un plan Q défini par la direction D1 et une direction D2 sensiblement perpendiculaire à D1.

Dans la suite de cette description, afin de simplification, ce plan Q sera considéré horizontal et le tronçon de goulotte ouvert vers le haut. Les termes « haut », « bas », « latéral », « intérieur », « extérieur », « interne », « externe », seront employés en référence à un observateur O placé au milieu du canal défini par le tronçon de goulotte.

Toutefois, ainsi que le comprendra l'homme du métier, le tronçon de goulotte pourra être mis en place de manière telle que son ouverture ne soit pas vers le haut, mais par exemple vers le côté. De même, la paroi de fond pourra être inclinée par rapport à l'horizontale.

Les deux ailes latérales 3,4 saillent, sur les bords de la paroi de fond 2, suivant une direction générale verticale D3. Cette direction D3 forme un trièdre direct avec les directions D1 et D2 définies auparavant.

Dans le mode de réalisation représenté en figure 1, ces deux ailles latérales 3,4 sont sensiblement symétriques par rapport à un plan vertical médian S contenant le point O.

Dans d'autres modes de réalisations, non représentés, les deux ailes ne sont pas symétriques par rapport à un tel plan S. Par exemple, les deux ailes sont d'épaisseurs, de hauteurs, ou de profils différents.

Pour le mode de réalisation de la figure 1, compte tenu de la symétrie des ailes 3,4, seule l'une d'entre elle va maintenant être décrite en détail.

Partant de son congé de raccordement inférieur 5 à la face interne de la paroi de fond 2, cette aile 4 présente, sur sa face interne :
- une première section 6 sensiblement plane et verticale ;
- une deuxième section 7 sensiblement horizontale ou légèrement inclinée par rapport à l'horizontale, et saillant vers l'intérieur du tronçon de goulotte 1.

Partant de son congé de raccordement inférieur 8 à la face externe de la paroi de fond 2, cette aile 4 présente, sur sa face externe :
- un évidement 9 formant mortaise d'un assemblage à queue d'aronde, cet évidement 9 ayant une forme de trapèze lorsque vu en coupe transversale ;
- une section sensiblement plane et verticale 10 ;
- une section sensiblement plane et horizontale 11, saillant vers l'intérieur du tronçon de goulotte.

De sorte à maintenir une épaisseur sensiblement constante pour l'aile 4, celle-ci est pourvue de deux gorges, à savoir :
- une gorge intérieure 12, s'étendant entre la première et la deuxième section 6,7 de la face interne de l'aile, et disposée à même hauteur que la section plane verticale 10 de la face externe de l'aile ;
- une gorge extérieure 13, s'étendant entre la section plane verticale 10 et la section horizontale 11 de la face externe de l'aile, et disposée à une hauteur supérieure par rapport à la gorge intérieure 12.

L'épaisseur sensiblement constante de l'aile 4 permet, outre une économie de matière, de former une zone d'articulation, par déformation élastique contrôlée 14.

Cette zone d'articulation 14 est sensiblement bordée vers le bas par le bord haut de l'évidement 9. Cette zone d'articulation 14 est sensiblement bordée vers le haut par la base du plat de support 15 du couvercle de goulotte.

La rigidité de cette zone d'articulation 14, pour un matériau donné, pourra être réduite par augmentation de la profondeur de la gorge intérieure 12 ou de la gorge extérieure 13.

L'aile 4 peut comporter plus d'une gorge intérieure et/ou plus d'une gorge extérieure, disposées à même hauteur ou non, afin de former des amincissements formant zone d'articulation type charnière.

Dans un premier type de réalisation, les gorges 12,13 et l'évidement 9 s'étendent sur toute la longueur du tronçon de profilé, ce tronçon étant élaboré par extrusion, pultrusion, ou tout autre procédé équivalent choisi en fonction du matériau constituant la goulotte.

Dans un deuxième type de réalisation, les gorges 12,13 et/ou l'évidement 9 ne s'étendent pas sur toute la longueur du tronçon de profilé, ce tronçon étant élaboré par exemple par moulage, injection, ou tout autre procédé équivalent choisi en fonction du matériau constituant la goulotte.

Ce matériau peut être choisi parmi le groupe comprenant les alliages métalliques, notamment aciers et alliages d'aluminium, les matériaux polymères, les matériaux composites, par exemple à matrice polymère et renfort métallique.

Par exemple, les tronçons de goulottes sont en acier galvanisé à chaud et/ou revêtu de résines telles que par exemple résines époxy ou polyester. En variante, les tronçons de goulottes peuvent être en alliage d'aluminium type AG3, ou en acier inoxydable type Z8C17, Z2CN18-10, Z6CNDT17-12.

Dans un mode de réalisation particulier, les tronçons de goulottes sont en matériau composite, notamment pultrudé.

Dans un autre mode de réalisation, les tronçons de goulottes sont formés de deux matériaux polymères coextrudés. Ainsi, par exemple, la partie inférieure des ailes, pourvue de la mortaise d'assemblage à queue d'aronde, pourra être réalisée en un matériau polymère sensiblement rigide, tandis que la partie supérieure des ailes sera réalisée en un matériau polymère de plus grande souplesse, facilitant sa déformation élastique contrôlée lors de la mise en place du couvercle.

Dans un premier type de réalisation, les ailes 3,4 et la paroi de fond 2 sont venus de matière.

Dans un autre type de réalisation, au moins une aile 3,4 est assemblée à la paroi de fond, par exemple par collage, soudage, ou tout autre moyen équivalent choisi en fonction des matériaux mis en oeuvre.

Dans un mode particulier de mise en oeuvre, lorsque les ailes 3,4 sont rapportées sur le fond 2, ce fond comprend des ondulations transversales venues de matière ou issues de la déformation de cette paroi de fond.

En variante, des raidisseurs sont rapportés sur la paroi de fond, ces raidisseurs étant le cas échéant perforés pour permettre la fixation des câbles par collier, sans avoir à perforer la paroi de fond de la goulotte.

Dans un type de réalisation, la paroi de fond et les ailes des tronçons de goulottes sont sensiblement pleines, et un couvercle également plein est mis en place sur les goulottes. Ce type de réalisation assure une protection aussi complète que possible des câbles vis à vis de l'environnement.

On se rapporte maintenant aux figures 2 à 4 qui illustrent quelques-uns uns des avantages de la structure du profilé représenté en figure 1.

Sur la figure 2 est représenté un mode de montage, par encliquetage, d'un couvercle 20 sur la goulotte. Ce couvercle 20 comprend une paroi de fond 21 sensiblement plane, bordée par une saillie latérale 22. Ce couvercle comprend une deuxième saillie 23, placée à une distance d1 légèrement inférieure ou sensiblement égale à la largeur d2 du plat de réception 15.

Les saillies 22,23 peuvent s'étendre longitudinalement sur toute la longueur du couvercle ou être discontinues.

La hauteur des saillies 22,23 peut être inférieure à celle du plat 15 de réception, ainsi qu'il est représenté en figure 2. En variante, la saillie latérale 22 peut venir se plaquer contre la section sensiblement verticale 10 de la face externe de l'aile, et ainsi recouvrir la gorge externe 13.

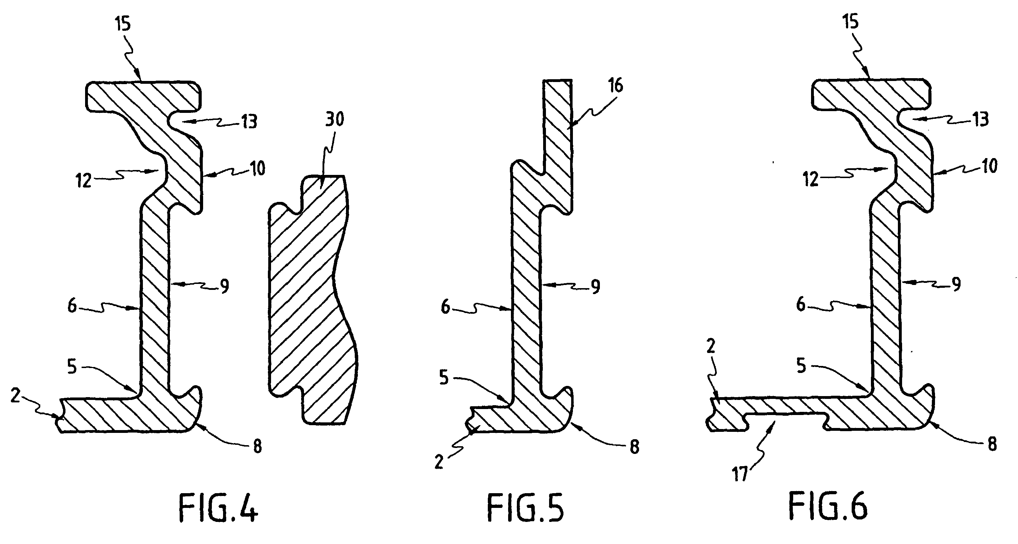

La forme extérieure en queue d'aronde d'au moins une aile 3,4 permet, ainsi qu'il est représenté schématiquement en figure 4, de loger une éclisse 30 qui pourra au besoin être pré-montée en position rentrée et retirée à demi lors de l'assemblage des tronçons de goulottes entre eux.

Plus précisément, lorsque deux tronçons de goulotte du type représenté en figure 1 doivent être assemblés, l'opérateur les dispose aboutés, leurs évidements longitudinaux 9 étant sensiblement placés en alignement et continuité.

Puis l'opérateur déplace les éclisses contenues dans les évidements de chaque tronçon de goulotte, de sorte qu'une partie de la longueur de ces éclisses vienne se loger dans l'évidement du tronçon de goulotte contigu.

Ainsi, par « retirée à demi », on désigne ici le fait que sensiblement la moitié de la longueur d'une l'éclisse saille au-delà du plan transversal d'extrémité d'un premier tronçon de goulotte, la partie saillante de cette éclisse étant apte à venir se loger dans l'évidement d'un deuxième tronçon de goulotte contigu.

Il est entendu que les éclisses peuvent être télescopées sur une longueur supérieure ou inférieure à la moitié de leur dimension longitudinale.

La forme extérieure en queue d'aronde d'au moins une aile 3,4 permet par ailleurs de fixer des accessoires de supportage électrique, des boîtiers de dérivation ou tout autre accessoire coulissant ou s'encliquetant dans la mortaise.

Ainsi qu'il est représenté en figure 3, cette forme extérieure en queue d'aronde permet en outre de fixer les tronçons de goulottes sur des supports tels que des consoles par le biais de clames 40, sans avoir à percer la paroi de fond 2. Par « clame » on désigne ici une petite pièce métallique maintenant provisoirement les extrémités de deux éléments de tronçons de goulottes à assembler, pour faciliter la réalisation de leur assemblage définitif.

La forme des ailes 3,4, dans leur partie supérieure, permet non seulement l'encliquetage de couvercle, comme représenté en figure 2, mais aussi de donner une inertie importante dans le sens transverse, et donc de retarder le déversement des ailes 3,4.

On se rapporte maintenant aux figures 5 et suivantes, qui illustrent différentes variantes de réalisation de l'invention.

Sur la figure 5 est schématisée la possibilité d'un bord extrême libre haut 16 sensiblement plan et vertical pour l'aile supportant la mortaise d'assemblage en queue d'aronde.

Le tronçon de goulotte représenté en figure 6 est pourvu sur une de ses ailes au moins d'une mortaise tournée vers l'extérieur, et comporte au moins une deuxième mortaise d'assemblage 17 à queue d'aronde, tournée vers l'extérieur, cette deuxième mortaise 17 étant portée par la paroi de fond 2.

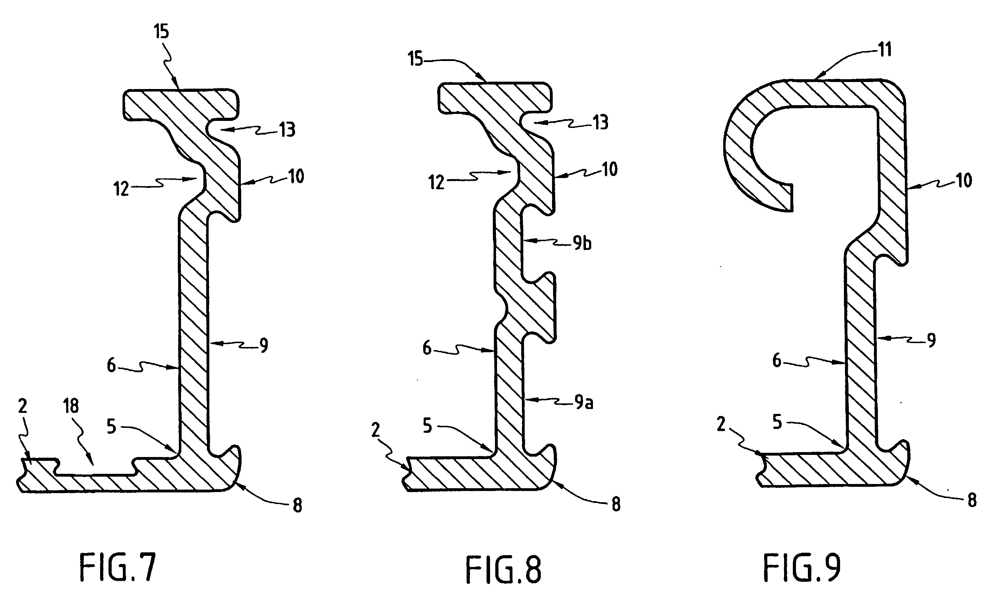

La figure 7 est une vue analogue à la figure 6, le tronçon de goulotte schématisé en coupe transversale étant pourvu, sur au moins une de ses ailes, d'au moins une mortaise d'assemblage en queue d'aronde, tournée vers l'extérieur, la paroi de fond 2 de la goulotte comprenant au moins une mortaise d'assemblage à queue d'aronde 18, tournée vers l'intérieur de la goulotte.

Dans certaines variantes, non représentées, la paroi de fond est pourvue d'au moins deux mortaises d'assemblage à queue d'aronde, au moins une des mortaises étant tournée vers l'extérieur de la goulotte.

Dans la variante de réalisation de la figure 8, au moins une des ailes du tronçon de goulotte est pourvue de deux mortaises d'assemblage en queue d'aronde 9a,9b, tournée vers l'extérieur. Ces deux mortaises 9a,9b peuvent être identiques ou non dans leurs formes et/ou dimensions.

La figure 9 illustre une variante de réalisation du bord extrême libre des ailes de tronçon de goulotte.

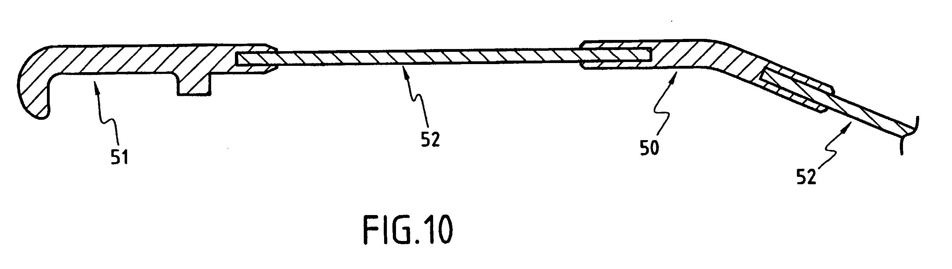

La figure 10 illustre un mode de réalisation d'un couvercle de goulotte, ce couvercle comprenant deux parties extrêmes sensiblement identiques à celle représentée en figure 2.

Seule une des parties extrêmes est représentée sur la figure 10.

Ce couvercle présente une forme en accent circonflexe lorsque vu en coupe transversale. Cette forme permet de limiter l'accumulation de poussières et/ou la rétention d'eau. Cette forme est obtenue par la liaison entre une pièce rigide 50 arquée et les deux parties extrêmes 51, liaison effectuée par des sections de plaque mince 52, par exemple collées.

En variante de réalisation, non représentée, le couvercle présente une section transversale bombée, ou en U, en pseudo V, en pseudo U.

Les tronçons de goulotte qui viennent d'être décrites présentent de nombreux avantages.

En particulier, la présence sur les ailes, la paroi de fond, de mortaises d'assemblage à queue d'aronde, d'ouverture tournée vers l'extérieur du tronçon de goulotte facilite :
- l'assemblage et le désassemblage mutuel des tronçons de goulotte, sans mise en place impérative de perçages des parois de la goulotte ;
- le montage et démontage des goulottes sur des supports tels que consoles sans perçage ou altération des parois de la goulotte ;
- la mise en place d'accessoires sur les goulottes, sans démontage de ces goulottes et sans perçage impératif de celles-ci.

En plus d'une résistance élevée au déversement, les goulottes obtenues par assemblage des tronçons du type décrit auparavant permettent ainsi une protection améliorée des câbles, y compris lors d'interventions de maintenance.

## Revendications

1. Tronçon de chemin à câbles en forme de goulotte, de section transversale en forme générale de U ou de C, **caractérisé en ce qu'**au moins une de ses parois de pourtour (2,3,4) est pourvue d'au moins un évidement externe formant mortaise d'assemblage à queue d'aronde (9,17), destiné à loger une éclisse d'assemblage de tronçons de goulottes disposés aboutés, les évidements longitudinaux des tronçons étant sensiblement placés en alignement et continuité, l'ouverture de la mortaise (9,17) étant tournée vers l'extérieur du tronçon de chemin à câble.

2. Tronçon de chemin à câble selon la revendication 1, **caractérisé en ce qu'**il comprend une paroi de fond (2) et deux ailes latérales (3,4) disposées en regard, au moins une des deux ailes (3,4) étant pourvue d'au moins un desdits évidements externes formant mortaise d'assemblage à queue d'aronde (9).

3. Tronçon de chemin à câble selon la revendication 2, **caractérisé en ce que** la paroi de fond (2) est pourvue d'au moins un desdits évidements externes formant mortaise d'assemblage à queue d'aronde (17).

4. Tronçon de chemin à câbles selon la revendication 2 ou 3, **caractérisé en ce que** les deux ailes (3,4) sont sensiblement symétriques par rapport à un plan (S) perpendiculaire à la paroi de fond (2).

5. Tronçon de chemin à câble selon l'une quelconque des revendications 1 à 4, **caractérisé en ce qu'**au moins une de ses parois de pourtour (2,3,4) est pourvue d'au moins un évidement interne (18) formant mortaise d'assemblage.

6. Tronçon de chemin à câble selon la revendication 5, **caractérisé en ce que** ledit évidement interne (18) forme une mortaise d'assemblage à queue d'aronde.

7. Tronçon de chemin à câble selon l'une quelconque des revendications 2 à 6, **caractérisé en ce que** sa paroi de fond (2) est pourvue d'ondulations transversales formant raidisseurs et aptes à supporter des moyens de maintien des câbles en position dans le tronçon de goulotte.

8. Tronçon de chemin à câble selon l'une quelconque des revendications 1 à 7, **caractérisé en ce qu'**il est élaboré en un matériau choisi parmi le groupe comprenant les alliages métalliques, les matériaux polymères, les matériaux composites.

9. Tronçon de chemin à câble selon la revendication 8, **caractérisé en ce qu'**il est en forme générale de profilé élancé rectiligne, ce profilé étant obtenu par extrusion, co-extrusion, pultrusion ou tout autre procédé équivalent.

10. Tronçon de chemin à câble selon la revendication 8, **caractérisé en ce qu'**il est en forme générale de profilé courbe, ce profilé étant obtenu par moulage, injection, ou tout autre procédé équivalent.

11. Tronçon de chemin à câble selon la revendication 8, **caractérisé en ce qu'**il est élaboré en matériau composite pultrudé.

12. Tronçon de chemin à câble selon l'une quelconque des revendications 2 à 11, **caractérisé en ce que**, partant de son congé de raccordement inférieur (5) à la face interne de la paroi de fond (2), au moins une aile (4) du tronçon de goulotte (1) présente, sur sa face interne :
- une première section (6) sensiblement plane et verticale ;
- une deuxième section (7) sensiblement horizontale ou légèrement inclinée par rapport à l'horizontale, et saillant vers l'intérieur du tronçon de goulotte.

13. Tronçon de chemin à câble selon la revendication 12, **caractérisé en ce que**, partant de son congé de raccordement inférieur (8) à la face externe de la paroi de fond (2), ladite aile (4) présente, sur sa face externe :
- un évidement (9) formant mortaise d'un assemblage à queue d'aronde, cet évidement (9) ayant une forme de trapèze lorsque vu en coupe transversale ;
- une section sensiblement plane et verticale (10) ;
- une section sensiblement plane et horizontale (11), saillant vers l'intérieur du tronçon de goulotte.

14. Tronçon de chemin à câble selon la revendication 13, **caractérisé en ce que** ladite aile (4) est pourvue de deux gorges, à savoir :
- une gorge intérieure (12), s'étendant entre la première et la deuxième section (6,7) de la face interne de l'aile, et disposée à même hauteur que la section plane verticale (10) de la face externe de l'aile ;
- une gorge extérieure (13), s'étendant entre la section plane verticale (10) et la section horizontale (11) de la face externe de l'aile, et disposée à une hauteur supérieure par rapport à la gorge intérieure (12).

15. Tronçon de chemin à câble selon l'une quelconque des revendications 2 à 14, **caractérisé en ce qu'**il comporte un couvercle (20) encliqueté sur les parties supérieures desdites ailes (3,4).

16. Tronçon de chemin à câble selon la revendication 15, **caractérisé en ce que** ledit couvercle (20) présente une section transversale en forme de V, de U, de pseudo V ou de pseudo U.

17. Goulotte formée par l'assemblage de tronçons tels que présentés dans l'une quelconque des revendications 1 à 16, **caractérisée en ce que** cet assemblage est obtenu par des éclisses (30) logées dans au moins un desdits évidements externes formant mortaise d'assemblage à queue d'aronde (9,17).

18. Goulotte selon la revendication 17, **caractérisée en ce qu'**elle comprend des raidisseurs rapportés sur la paroi de fond (2) d'au moins un tronçon de goulotte.

19. Procédé de montage d'une goulotte telle que présentée dans la revendication 17 ou 18, **caractérisé en ce qu'**il comprend une étape de pré-montage d'au moins une éclisse, sur un tronçon de goulotte, cette éclisse étant disposée en position rentrée dans un évidement externe formant mortaise d'assemblage à queue d'aronde, cet évidement (9,17) débouchant sur un bord d'extrémité dudit tronçon de goulotte.

20. Procédé de montage selon la revendication 19, **caractérisé en ce qu'**il comprend une étape de fixation d'au moins un tronçon de goulotte sur un support tel qu'une console, au moyen de clames (40) venant en appui sur un bord d'un évidement externe (9,17).

## Patentansprüche

1. Teilstück eines Kabelkanals in Form einer Kabelwanne mit einem im allgemeinen U- oder C-förmigen Querschnitt, **dadurch gekennzeichnet, dass** mindestens eine seiner Umfangswände (2,3,4) mit mindestens einer äußeren Aussparung ausgestattet ist, die einen Schwalbenschwanz-Zusammenbau-Einschnitt (9,17) bildet, der dazu bestimmt ist, eine Schiene zum Zusammenfügen von Teilstücken von Kabelwannen, die aneinander stoßend angeordnet sind, aufzunehmen, wobei die longitudinalen Aussparungen der Teilstücke im wesentlichen aufeinander ausgerichtet und zusammenhängend sind, wobei die Öffnung des Einschnittes (9,17) zur Außenseite des Kabelkanal-Teilstückes gerichtet ist.

2. Teilstück eines Kabelkanals nach Anspruch 1, **dadurch gekennzeichnet, dass** es eine Bodenwand (2) und zwei seitliche Schenkel (3,4) aufweist, die einander gegenüberstehend angeordnet sind, wobei mindestens einer der beiden Schenkel (3,4) mit mindestens einer der genannten äußeren Aussparungen ausgestattet ist, die einen Schwalbenschwanz-Zusammenbau-Einschnitt (9) bilden.

3. Teilstück eines Kabelkanals nach Anspruch 2, **dadurch gekennzeichnet, dass** die Bodenwand (2) mit mindestens einer der genannten äußeren Aussparungen ausgestattet ist, die einen Schwalbenschwanz-Zusammenbau-Einschnitt (17) bilden.

4. Teilstück eines Kabelkanals nach Anspruch 2 oder 3, **dadurch gekennzeichnet, dass** die beiden Schenkel (3,4) im wesentlichen symmetrisch zu einer Ebene (S) senkrecht zu der Bodenwand (2) angeordnet sind.

5. Teilstück eines Kabelkanals nach einem der Ansprüche 1 bis 4, **dadurch gekennzeichnet, dass** mindestens eine seiner Umfangswände (2,3,4) mit mindestens einer inneren Aussparung (18) ausgestattet ist, die einen Zusammenbau-Einschnitt bildet.

6. Teilstück eines Kabelkanals nach Anspruch 5, **dadurch gekennzeichnet, dass** die genannte innere Aussparung (18) einen Schwalbenschwanz-Zusammenbau-Einschnitt bildet.

7. Teilstück eines Kabelkanals nach einem der Ansprüche 2 bis 6, **dadurch gekennzeichnet, dass** seine Bodenwand (2) mit Querwellen ausgestattet ist, die Versteifungen bilden und geeignet sind, Einrichtungen zum festen Positionieren der Kabel in der Kabelwanne zu tragen.

8. Teilstück eines Kabelkanals nach einem der Ansprüche 1 bis 7, **dadurch gekennzeichnet, dass** es aus einem Material hergestellt ist, ausgewählt aus der Gruppe, die umfasst Metalllegierungen, polymere Materialien und Verbundmaterialien.

9. Teilstück eines Kabelkanals nach Anspruch 8, **dadurch gekennzeichnet, dass** es im allgemeinen die Form eines geraden länglichen Profils hat, das durch Extrusion, Coextrusion, Pultrusion (Strangziehen) oder jedes andere äquivalente Verfahren hergestellt worden ist.

10. Teilstück eines Kabelkanals nach Anspruch 8, **dadurch gekennzeichnet, dass** es im allgemeinen in Form eines gekrümmten Profils vorliegt, wobei dieses Profil durch Formen, Spritzgießen oder jedes andere äquivalente Verfahren hergestellt worden ist.

11. Teilstück eines Kabelkanals nach Anspruch 8, **dadurch gekennzeichnet, dass** es aus einem pultrudierten Verbundmaterial hergestellt ist.

12. Teilstück eines Kabelkanals nach einem der Ansprüche 2 bis 11, **dadurch gekennzeichnet, dass**, ausgehend von seiner unteren Verbindungs-Hohlkehle (5) an der inneren Oberfläche der Bodenwand (2), mindestens ein Schenkel (4) der Kabelwanne (1) auf seiner inneren Oberfläche aufweist:
- einen ersten, im wesentlichen ebenen und vertikalen Abschnitt (6); und
- einen zweiten, im wesentlichen horizontalen oder gegenüber der Horizontalen leicht geneigten und ins Innere des Teilstücks der Kabelwanne hineinragenden zweiten Abschnitt (7).

13. Teilstück eines Kabelkanals nach Anspruch 12, **dadurch gekennzeichnet, dass**, ausgehend von seiner unteren Verbindungs-Hohlkehle (8) der genannte Schenkel (4) an der äußeren Oberfläche der Bodenwand (2) aufweist:
- eine Aussparung (9), die einen Schwalbenschwanz-Zusammenbau-Einschnitt bildet, wobei diese Aussparung (9) im Querschnitt die Form eines Trapezes hat,
- einen im wesentlichen ebenen und vertikalen Abschnitt (10); und
- einen im wesentlichen ebenen und horizontalen Abschnitt (11), der in das Innere des Teilstücks der Kabelwanne hineinragt.

14. Teilstück eines Kabelkanals nach Anspruch 13, **dadurch gekennzeichnet, dass** der genannte Schenkel (4) mit zwei Hohlkehlen ausgestattet ist, nämlich:
- mit einer inneren Hohlkehle (12), die sich zwischen dem ersten und dem zweiten Abschnitt (6,7) der inneren Oberfläche des Schenkels erstreckt und in der gleichen Höhe wie der ebene vertikale Abschnitt (10) der äußeren Oberfläche des Schenkels angeordnet ist; und
- eine äußere Hohlkehle (13), die sich zwischen dem ebenen vertikalen Abschnitt (10) und dem horizontalen Abschnitt (11) der äußeren Oberfläche des Schenkels erstreckt und in einer Höhe angeordnet ist, die höher ist als die innere Hohlkehle (12).

15. Teilstück eines Kabelkanals nach einem der Ansprüche 2 bis 14, **dadurch gekennzeichnet, dass** es eine Abdeckung (20) aufweist, die in die oberen Abschnitte der genannten Schenkel (3,4) einrastet.

16. Teilstück eines Kabelkanals nach Anspruch 15, **dadurch gekennzeichnet, dass** die genannte Abdeckung (20) einen V-, U-, Pseudo-V- oder Pseudo-U-förmigen Querschnitt aufweist.

17. Kanalwanne, die durch Zusammenfügen der Teilstücke gemäß einem der Ansprüche 1 bis 6 gebildet wird, **dadurch gekennzeichnet, dass** dieses Zusammenfügen erzielt wird durch Schienen (30), die in mindestens einer der genannten äußeren Aussparungen, die einen Schwalbenschwanz-Zusammenbau-Einschnitt (9,17) bilden, angeordnet sind.

18. Kabelwanne nach Anspruch 17, **dadurch gekennzeichnet, dass** sie Versteifungen umfasst, die auf der Bodenwand (2) mindestens eines Teilstücks der Kabelwanne angeordnet sind.

19. Verfahren zum Montieren einer Kabelwanne, wie sie in den Ansprüchen 17 oder 18 beschrieben ist, **dadurch gekennzeichnet, dass** es umfasst eine Vormontage mindestens einer Schiene auf einem Teilstück der Kabelwanne, wobei diese Schiene in einer eingeschobenen Position in einer äußeren Aussparung angeordnet ist, die einen Schwalbenschwanz-Zusammenbau-Einschnitt bildet, wobei diese Aussparung (9,17) in einen Rand des Endes des genannten Teilstücks einer Kabelwanne mündet.

20. Verfahren nach Anspruch 19, **dadurch gekennzeichnet, dass** es eine Stufe zur Fixierung mindestens eines Teilstücks der Kabelwanne auf einem Träger wie einer Konsole mittels Einspanneinrichtungen (40) umfasst, die auf einem Rand einer äußeren Aussparung (9,17) aufliegen.

## Claims

1. Cable duct section in the form of a trough, having a generally U-shaped or C-shaped cross-section, **characterised in that** at least one of its peripheral walls (2, 3, 4) is provided with at least one external recess forming a dovetail assembly mortise (9, 17) and intended to house a cleat for trough sections disposed end to end, the longitudinal recesses of the sections being substantially placed in alignment and in continuity, the opening of the mortise (9, 17) being turned towards the exterior of the cable duct section.

2. Cable duct section according to claim 1, **characterised in that** it comprises a base wall (2) and two lateral wings (3, 4) disposed opposite, at least one of the two wings (3, 4) being provided with at least one of said external recesses forming a dovetail assembly mortise (9).

3. Cable duct section according to claim 2, **characterised in that** the base wall (2) is provided with at least one of said external recesses forming a dovetail assembly mortise (17).

4. Cable duct section according to claim 2 or 3, **characterised in that** the two wings (3, 4) are substantially symmetrical in relation to a plane (S) perpendicular to the base wall (2).

5. Cable duct section according to any one of claims 1 to 4, **characterised in that** at least one of its peripheral walls (2, 3, 4) is provided with at least one internal recess (18) forming an assembly mortise.

6. Cable duct section according to claim 5, **characterised in that** said internal recess (18) forms a dovetail assembly mortise.

7. Cable duct section according to any one of claims 2 to 6, **characterised in that** its base wall (2) is provided with transverse undulations forming stiffeners and capable of supporting means of keeping the cables in position in the trough section.

8. Cable duct section according to any one of claims 1 to 7, **characterised in that** it is formed in a material chosen from the group comprising metal alloys, polymer materials, composite materials.

9. Cable duct section according to claim 8, **characterised in that** it is in the general shape of a slender rectilinear section, this section being obtained by extrusion, co-extrusion, pultrusion or any other equivalent method.

10. Cable duct section according to claim 8, **characterised in that** it is in the general shape of a curved section, this section being obtained by moulding, injection, or any other equivalent method.

11. Cable duct section according to claim 8, **characterised in that** it is formed in a pultruded composite material.

12. Cable duct section according to any one of claims 2 to 11, **characterised in that,** starting from its lower fillet (5) to the inner face of the base wall (2), at least one wing (4) of the trough section (1) has, on its inner face:
- a first substantially planar and vertical section (6);
- a second section (7) which is substantially horizontal or slightly inclined with respect to the horizontal, and projects towards the inside of the trough section.

13. Cable duct section according to claim 12, **characterised in that,** starting from its lower fillet (8) to the outer face of the base wall (2), said wing (4) has, on its outer face:
- a recess (9) forming a dovetail assembly mortise, this recess (9) having a trapezoid shape when viewed in cross-section;
- a substantially planar and vertical section (10);
- a substantially planar and horizontal section (11), projecting towards the inside of the trough section.

14. Cable duct section according to claim 13, **characterised in that** said wing (4) is provided with two grooves, i.e.:
- an inner groove (12), extending between the first and second sections (6,7) of the inner face of the wing, and disposed at the same height as the planar vertical section (10) of the outer face of the wing;
- an inner groove (13), extending between the planar vertical section (10) and the horizontal section (11) of the outer face of the wing, and disposed at a greater height than the inner groove (12).

15. Cable duct section according to any one of claims 2 to 14, **characterised in that** it comprises a cover (20) locked onto the upper portions of said wings (3, 4).

16. Cable duct section according to claim 15, **characterised in that** said cover (20) has a cross section which is V-shaped, U-shaped, or pseudo V-shaped or pseudo U-shaped.

17. Cable trough formed by assembling sections such as presented in any one of claims 1 to 16, **characterised in that** this assembly is obtained by cleats (30) housed in at least one of said external recesses forming a dovetail assembly mortise (9, 17).

18. Cable trough according to claim 17, **characterised in that** it comprises stiffeners added to the base wall (2) of at least one trough section.

19. Method of assembling a trough such as presented in claim 17 or 18, **characterised in that** it comprises a stage of pre-mounting at least one cleat, on one trough section, this cleat being disposed in a sunken position in an external recess forming a dovetail assembly mortise, this recess (9, 17) opening into an end edge of said trough section.

20. Assembly method according to claim 19, **characterised in that** it comprises a stage of fixing at least one trough section on a support such as a bracket, by means of clamping claws (40) coming to rest on an edge of an external recess (9, 17).
